# EUROPÄISCHE PATENTANMELDUNG

(11) **EP 0 760 523 A1**
(43) Veröffentlichungstag der Anmeldung: **05.03.1997**
(21) Anmeldenummer: 96112782.6
(22) Anmeldetag: 07.08.1996
(51) Int. Cl.: H01F 41/02

(54) **Verfahren zur Herstellung von Formteilen durch Pressen von Ferritgranulat**

(30) Priorität: 04.09.1995 DE 19532603
(71) Anmelder: SIEMENS MATSUSHITA COMPONENTS GmbH & CO KG, 81541 München (DE)
(72) Erfinder: Schulz, Gerd, Dr., 85051 Ingolstadt (DE); Beer, August, Dr., 82041 Deisenhofen (DE); Schaner, Dieter, 84559 Kraiburg (DE)
(74) Vertreter: Fuchs, Franz-Josef, Dr.-Ing.

(57) **Zusammenfassung**

Bei einem Verfahren zur Herstellung von Formteilen durch Pressen von Ferritgranulat zu Formteilen werden dem Ferritgranulat organische Bindemittel in einem Gewichtsanteil von 0,5 bis 1,5 Gewichtsprozent und Befeuchtungsmittel in einem Gewichtsanteil von 1,0 bis 5 Gewichtsprozent zugesetzt.

## Beschreibung

Die vorliegende Erfindung betrifft ein Verfahren zur Herstellung von Ferritteilen durch Pressen von Ferritgranulat nach dem Oberbegriff des Patentanspruchs.

Die Herstellung von Ferritkernen für induktive elektrische Bauelemente erfolgt grob skizziert folgendermaßen: Aus Rohmaterial wird in mehreren Schritten, nämlich Einwiegen, Mischen, Pelletieren, Kalzinieren, Malen, Homogenisieren und Sprühtrocknen ein Ferritgranulat hergestellt. Aus diesem Granulat werden durch Pressen, Entkohlen, Sintern und mechanische Formgebung Ferritkerne hergestellt. Zum generellen Ablauf dieses Verfahrens wird auf Ferritkerne-Grundlagen, Dimensionierung, Anwendungen in der Nachrichtentechnik, von W. Kampzik und E. Röß, 1978, Siemens AG, Berlin und München, Seiten 64 bis 75 hingewiesen. Dem Ferritgranulat werden vor dem Pressen organische Bindemittel und Befeuchtungsmittel zugesetzt, um eine einwandfreie Formgebung zu gewährleisten. Die Bindemittel werden typischerweise in einem Gewichtsanteil von 1,1 bis 2,3 Gewichtsprozent zugesetzt.

In einem nachfolgenden Temperaturprozeß während der Entkohlung und/oder während des Sinterns werden die Zusätze durch thermische Oxidation abgebaut. Dabei können Temperatursprünge von bis zu 100°C auftreten. Dies führt zu großen thermischen Belastungen der Formteile.

Darüberhinaus kommen auch hohe spezifische Preßdrücke von mehr als 2 to/cm² im Formgebungsprozeß zur Anwendung.

Der vorliegenden Erfindung liegt die Aufgabe zugrunde, ein Verfahren in der in Rede stehenden Art anzugeben, bei dem die Formgebung durch geringere Preßdrücke möglich ist und die thermische Belastung der Formteile während des Abbaus der organischen Zusätze minimiert ist.

Diese Aufgabe wird bei einem Verfahren der eingangs genannten Art erfindungsgemäß durch die Merkmale des Patentanspruchs gelöst.

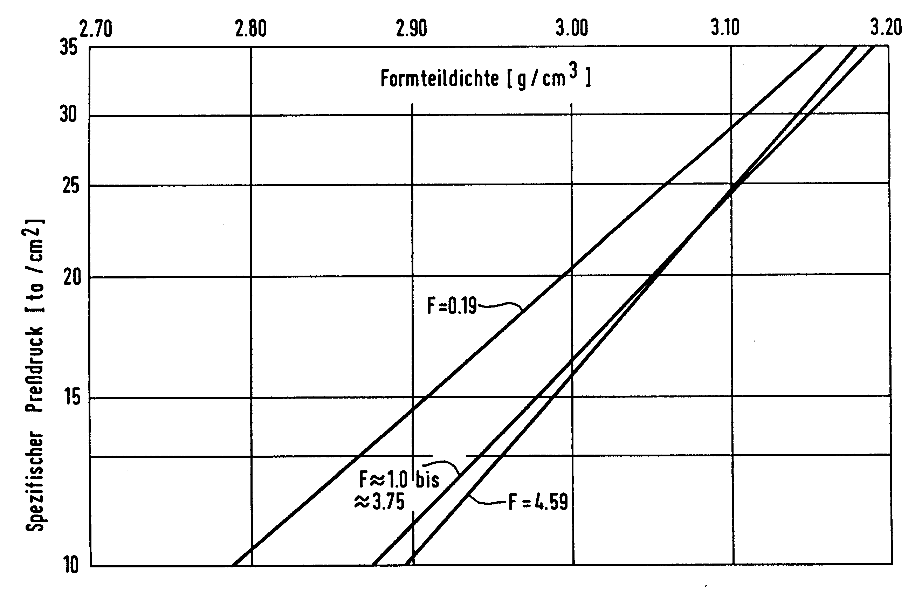

Die Erfindung wird nachfolgend anhand eines Diagramms gemäß der einzigen Figur der Zeichnung näher erläutert, in dem auf der Abszisse die Formteildichte und auf der Ordinate der spezifische Preßdruck mit dem Feuchtegehalt als Parameter aufgetragen ist.

Wird der Gewichtsanteil der organischen Bindemittelzusätze auf 0,5 bis 1,5 Gewichtsprozent reduziert und der Feuchtegehalt des Granulats auf 1,0 bis 5,0 Gewichtsprozent erhöht, so ergibt sich überraschenderweise eine Reduzierung des spezifischen Preßdrucks auf ca. 70% seines ursprünglichen Wertes, wie dies aus dem Diagramm nach der Figur hervorgeht. In diesem Diagramm sind drei Preßkurven für Feuchtegehalte von 0,19 ungefähr 1,0 bis ungefähr 3,75 sowie 4,59 aufgetragen. Tatsächlich ergibt sich für einen Feuchtegehalt von ungefähr 1,0 bis ungefähr 3,75 Gewichtsprozent nicht nur eine einzige Kurve. Diese Kurven liegen jedoch so eng beieinander, daß aus Übersichtlichkeitsgründen in der Figur für diese Fälle nur eine einzige Kurve eingetragen ist.

Aus dem Diagramm ist ersichtlich, daß die Preßkurven der Granulate mit einem Feuchtegehalt zwischen etwa 1 bis 5 Gewichtsprozent deutlich unterhalb der Kurve für einen nicht vorhandenen bzw. vernachlässigbaren Feuchtegehalt von 0,19 Gewichtsprozent liegen. Es ergibt sich somit eine Reduzierung des spezifischen Preßdrucks um ca. 30% bei Einstellung ungefähr gleicher Rohteildichte.

Darüberhinaus wird durch die drastische Reduzierung des Gewichtsanteils der organischen Bindemittelzusätze auch die Gesamtwärmemenge während des thermischen Abbaus dieser Zusätze wesentlich verringert. Schädliche Temperatursprünge werden daher vermieden.

## Patentansprüche

1. Verfahren zur Herstellung von Formteilen durch Pressen von Ferritgranulat, bei dem dem Ferritgranulat organische Bindemittel und Befeuchtungsmittel zugesetzt werden und die Zusätze thermisch oxidativ abgebaut werden,
**dadurch gekennzeichnet,**
daß die organischen Bindemittel in einem Gewichtsanteil von 0,5 bis 1,5 Gewichtsprozent und Befeuchtungsmittel in einem Gewichtsanteil von 1,0 bis 5 Gewichtsprozent zugesetzt werden.
